# EUROPÄISCHE PATENTSCHRIFT

(11) **EP 1 652 720 B1**
(45) Veröffentlichungstag und Bekanntmachung des Hinweises auf die Patenterteilung: **09.04.2008**
(21) Anmeldenummer: 05021493.1
(22) Anmeldetag: 30.09.2005
(51) Int. Cl.: B60K 31/00, B62D 1/04

(54) **Geschwindigkeitssteuervorrichtung und Verfahren zum Steuern der Geschwindigkeit eines Fahrzeugs**
Method and device for controlling the speed of a vehicle
Procédé et dispositif de commande de la vitesse d'un véhicule

(30) Priorität: 29.10.2004 DE 102004052664
(43) Veröffentlichungstag der Anmeldung: 03.05.2006
(73) Patentinhaber: AUDI AG, 85045 Ingolstadt (DE)
(72) Erfinder: Stage, Susanne, 39114 Magdeburg (DE)
(74) Vertreter: Thielmann, Frank

(56) Entgegenhaltungen:
- EP-A- 0 798 150
- EP-A- 0 992 387
- EP-A- 1 129 885
- EP-A- 1 245 427
- EP-B- 0 553 192
- DE-A- 1 950 361
- PATENT ABSTRACTS OF JAPAN Bd. 2003, Nr. 02, 5. Februar 2003 (2003-02-05) -& JP 2002 316553 A (MITSUBISHI), 29. Oktober 2002 (2002-10-29)

## Beschreibung

Die vorliegende Erfindung betrifft eine Geschwindigkeitssteuervorrichtung für ein Fahrzeug gemäß dem Oberbegriff des Anspruchs 1. Darüber hinaus betrifft die Erfindung ein entsprechendes Verfahren zum Steuern der Geschwindigkeit eines Fahrzeugs.

Geschwindigkeitssteuervorrichtungen dieser bekannten Art sollen dazu dienen, den Fahrer während einer Autofahrt zu entlasten. Dabei soll die Geschwindigkeit des Fahrzeugs über die Geschwindigkeitssteuervorrichtung automatisch so gesteuert werden, dass sich das Fahrzeug dem Verkehrsstrom anpasst. Zu diesem Zweck ist an dem Fahrzeug eine Sensoreinrichtung angebracht, mit welcher mindestens ein Zielobjekt, meistens ein anderes Fahrzeug, geortet werden kann. Über eine Steuereinrichtung wird die Geschwindigkeit des Fahrzeugs entsprechend der Geschwindigkeit des vorherfahrenden Fahrzeugs angepasst, so dass ein vorgebbarer Abstand zwischen den beiden Fahrzeugen eingehalten wird.

Für die Fahrt auf Autobahnen oder auf Landstraßen, also auf Strecken, bei denen lange eine konstante Geschwindigkeit gefahren wird, eignet sich ein unter der Bezeichnung GRA/ACC (Geschwindigkeitsregelanlage/Adaptive Cruise Control) bekanntes System als Geschwindigkeitssteuervorrichtung. Dabei gibt der Fahrer über eine Eingabeeinrichtung einen Geschwindigkeitswert als Höchstgeschwindigkeit der Geschwindigkeitssteuervorrichtung vor. Solange die Sensoreinrichtung kein vorausfahrendes Kraftfahrzeug innerhalb eines bestimmten Sicherheitsabstands registriert, fährt das Fahrzeug automatisch mit dieser Geschwindigkeit. Wird jedoch ein vorherfahrendes Fahrzeug innerhalb des Sicherheitsabstandes registriert, so verlangsamt die Steuervorrichtung das Fahrzeug und steuert die Geschwindigkeit so, dass ein bestimmter Abstand zum vorausfahrenden Fahrzeug eingehalten wird. Erst bei Erkennung einer freien Strecke beschleunigt die Steuereinrichtung das Fahrzeug wieder auf die vorgegebene Geschwindigkeit.

Für die häufig wechselnde Fahrsituation im Stadtverkehr lässt sich diese Methode nicht anwenden. Statt dessen sollte die Geschwindigkeitssteuervorrichtung während einer Fahrt im Stadtverkehr die Geschwindigkeit des Fahrzeugs an die des vorherfahrenden Fahrzeugs anpassen. Dabei sollte immer ein bestimmter, in Bezug auf die Geschwindigkeit des Fahrzeugs sinnvoller Abstand zwischen dem Fahrzeug und dem vorherfahrenden Fahrzeug eingehalten werden.

Dennoch können im Stadtverkehr oder bei Verkehrsstau immer wieder Situationen auftreten, in denen der Fahrer die Geschwindigkeit selbst steuern und sich nicht allein auf die Geschwindigkeitssteuervorrichtung verlassen sollte. In der Druckschrift DE 102 10 547 A1 wird deshalb eine Geschwindigkeitssteuervorrichtung vorgeschlagen, welche in bestimmten Situationen, beispielsweise bei einer Fahrt des Fahrzeugs in einer engen Kurve, selbstständig erkennt, dass ein Steuern der Geschwindigkeit des Fahrzeugs durch den Fahrer nötig ist und sich deshalb selbst deaktiviert. Allerdings sind die Möglichkeiten einer Gefahrenerkennung durch die Geschwindigkeitssteuervorrichtung gering und das Unfallrisiko bei der Benutzung einer Geschwindigkeitssteuervorrichtung im Stadtverkehr ist damit relativ hoch.

Die JP 2002 316553 A betrifft eine Geschwindigkeitssteuervorrichtung für ein Fahrzeug. Mithilfe dieser Geschwindigkeitssteuervorrichtung kann die Geschwindigkeit des Fahrzeugs so gesteuert werden, dass es einem von einer Sensoreinrichtung erfassten Zielobjekt automatisch folgt. Dieses automatische Folgen des Zielobjekts wird jedoch nur ausgeführt, solange der Fahrer fortlaufend eine Betätigungskomponente betätigt.

In der EP 0 992 387 A2 sind eine Vorrichtung und ein Verfahren zum Steuern einer Längsbewegung eines Fahrzeugs beschrieben. Solange das Fahrzeug mit einer Geschwindigkeit unter einer vorgegebenen Grenzgeschwindigkeit fährt, lässt sich ein Abstandsregelmodus aktivieren, in welchem der Abstand des Fahrzeugs zu einem vorausfahrenden Fahrzeug selbsttätig geregelt wird. Der Abstandsregelmodus soll dabei insbesondere für den Stadtverkehr ausgelegt sein.

Des Weiteren betrifft die EP 1 245 427 A2 ein Fahrkontrollsystem zum automatischen Steuern einer Geschwindigkeit des Fahrzeugs mit einem als Tachometer dienenden Anzeigegerät. Das Anzeigegerät weist dabei ein Anzeigeelement auf, durch dessen Leuchten einem Fahrer des Fahrzeugs eine Aktivierung des Fahrkontrollsystems angezeigt wird.

Die Aufgabe der vorliegenden Erfindung ist es daher, eine gattungsgemäße Geschwindigkeitssteuervorrichtung und ein entsprechendes Verfahren bereitzustellen, mithilfe welcher ein guter Fahrkomfort bei einer Fahrt auf einer Autobahn oder einer Landstraße gewährleistet ist.

Die Aufgabe wird erfindungsgemäß durch die im Anspruch 1 genannten Merkmale gelöst.

Die Erfindung basiert auf der Erkenntnis, dass ein hohes Unfallsrisiko für den Stadtverkehr vermieden werden kann, wenn der Fahrer trotz Nutzung der Geschwindigkeitssteuervorrichtung seine Aufmerksamkeit weiterhin dem Straßenverkehr zuwendet. Es muss somit verhindert werden, dass sich der Fahrer während der Fahrt mit einer Geschwindigkeitssteuervorrichtung zu sehr auf diese verlässt und deshalb weniger selbst auf den Verkehr achtet. Dies kann erreicht werden mit einer Geschwindigkeitssteuervorrichtung, wie sie im Anspruch 1 beschrieben wird. Über die Notwendigkeit des Betätigen der Betätigungskomponente wird der Fahrer fortlaufend daran erinnert, seine Aufmerksamkeit trotz der Aktivierung der Geschwindigkeitssteuervorrichtung auf den Verkehr zu richten. Dadurch wird verhindert, dass sich der Fahrer zu sehr auf die Geschwindigkeitssteuervorrichtung verlässt und deshalb in bestimmten Situationen zu spät reagiert. Da der Fahrer nur die Betätigung der Betätigungskomponente unterbrechen muss, um die Geschwindigkeitssteuervorrichtung vom ersten in den zweiten Modus zu schalten, wird ihm zusätzlich der Umschaltvorgang erleichtert, da das Betätigen einer weiteren Betätigungskomponente zum Umschalten der Geschwindigkeitssteuervorrichtung vom ersten in den zweiten Modus entfällt. Die Geschwindigkeitssteuervorrichtung kann damit auch leichter durch den Fahrer deaktiviert werden.

Zusätzlich ist die erfindungsgemäße Geschwindigkeitssteuervorrichtung so ausgelegt, dass bei einer einmaligen Betätigung der Betätigungskomponente bei einer Geschwindigkeit des Fahrzeugs über einer Grenzwertgeschwindigkeit das Fahrzeug in einem dritten Modus gesteuert wird. Da das Fahren bei aktivierter Geschwindigkeitssteuervorrichtung auf einer Autobahn oder auf einer Landstraße ein weniger häufiges Eingreifen von Seiten des Fahrers voraussetzt, als das Fahren im Stadtverkehr, kann somit auf das permanente oder wiederholte Betätigen der Betätigungskomponente bei hohen Geschwindigkeiten verzichtet werden. Die Betätigungskomponente kann damit bei einer Geschwindigkeit über einem Grenzwert für die Eingabe weiterer Steuerbefehle des Fahrers an die Geschwindigkeitssteuervorrichtung genutzt werden.

Außerdem ist die Steuervorrichtung ausgelegt, im dritten Modus die Geschwindigkeit des Fahrzeugs so zu steuern, dass bei Nichterfassung eines Zielobjekts durch die Sensoreinrichtung eine vorgebbare Höchstgeschwindigkeit eingehalten wird und bei Erfassung eines Zielobjekts durch die Sensoreinrichtung ein vorgebbarer Abstand zu diesem eingehalten wird. Dies gewährleistet ein schnelles Fahren für den Fahrer bei gleichzeitiger Anpassung an den Verkehrsstrom.

Vorteilhafterweise kann die Steuervorrichtung ausgelegt sein, bei einem Übergang vom ersten in den zweiten Modus die Geschwindigkeit des Fahrzeugs zu verringern und/oder das Fahrzeug anzuhalten. Da eine Nichtbetätigung der Betätigungskomponente und ein damit verbundener Übergang vom ersten in den zweiten Modus auftreten kann, wenn die Aufmerksamkeit des Fahrers abgelenkt wurde, oder wenn sich plötzlich eine Gefahrensituation ergibt, ist es vorteilhaft, wenn das Fahrzeug automatisch verlangsamt oder angehalten wird. Vorzugsweise wird das Fahrzeug dabei erst auf eine Geschwindigkeitsstufe verlangsamt, welche in Bezug auf die vorhergefahrene Geschwindigkeit sinnvoll ist, um das Fahrzeug, falls der Fahrer innerhalb einer bestimmten Zeit nicht reagiert, ganz in den Stillstand zu überführen.

Vorzugsweise ist die Betätigungskomponente als Druckknopf an einem Lenkrad des Fahrzeugs ausgebildet und so angebracht, dass sich der Druckknopf mit dem Daumen der linken Hand des Fahrers bei gleichzeitigen Halten des Lenkrads mit der gleichen Hand drücken lässt. Dabei kann der Druckknopf durch den Fahrer entweder permanent oder in regelmäßigen Zeitabständen wiederholt gedrückt werden. Beides wird dem Fahrer durch ein optimiertes Anbringen des Druckknopfs an dem Lenkrad leichtgemacht.

Vorteilhafterweise umfasst die Geschwindigkeitssteuervorrichtung mindestens ein Anzeigeelement zur Anzeige der Steuerung der Fahrzeuggeschwindigkeit in dem ersten Modus oder in dem zweiten Modus mit oder ohne die Erfassung eines Zielobjekts durch die Sensoreinrichtung an den Fahrer. Auf diese Weise kann der Fahrer immer darüber informiert werden, in welchem Modus die Geschwindigkeitssteuervorrichtung gerade geschaltet ist, und/oder ob ein Fahrzeug innerhalb eines bestimmten Abstandes von der Sensoreinrichtung erfasst wurde. Damit ist ein besseres Verstehen der Vorgänge beim Steuern der Geschwindigkeit des Fahrzeugs durch die Geschwindigkeitssteuervorrichtung für den Fahrer gewährleistet.

Vorzugsweise ist mindestens ein Anzeigeelement in einen Tachometer und/oder in ein Fahrerinformationssystem des Fahrzeugs integriert. Da der Fahrer daran gewöhnt ist, während der freien Fahrt auf den Tachometer und auf das Fahrerinformationssystem zu achten, ist das Fahren mit einer Geschwindigkeitssteuervorrichtung bezüglich der Anzeige nicht mit einer Umstellung der Gewohnheiten des Fahrers verbunden.

Des Weiteren wird die Aufgabe erfindungsgemäß gelöst durch ein Verfahren zum Steuern der Geschwindigkeit eines Fahrzeugs nach Anspruch 6. Dabei sind die im Zusammenhang mit der erfindungsgemäßen Vorrichtung erwähnten Vorteile auch auf das erfindungsgemäße Verfahren anwendbar.

Die Erfindung wird im Folgenden anhand der beiliegenden Zeichnungen, die sich auf eine mögliche Ausführungsform der Erfindung beziehen, beschrieben. Es zeigen:
- Figur 1:: ein Lenkrad mit einer Eingabeeinrichtung zur Steuerung einer erfindungsgemäßen Geschwindigkeitssteuervorrichtung durch einen Fahrer;
- Figur 2:: einen Tachometer mit Anzeigeelementen einer Geschwindigkeitssteuervorrichtung; und
- Figur 3:: eine Anzeigefläche eines Fahrerinformationssystems mit Anzeigeelementen einer Geschwindigkeitssteuervorrichtung.

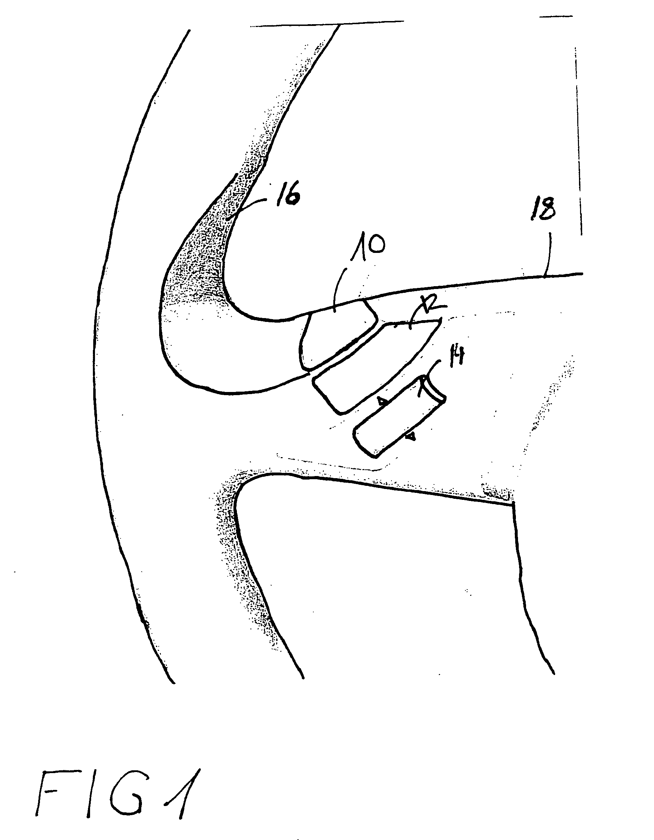

In Figur 1 ist ein Lenkrad mit einer Eingabeeinrichtung zur manuellen Bedienung einer Geschwindigkeitssteuervorrichtung zu erkennen. Über die Betätigungskomponenten der Eingabeeinrichtung kann ein Fahrer die Geschwindigkeitssteuervorrichtung sowohl für den Stadtverkehr als auch für den Autobahnverkehr aktivieren und steuern.

Dabei ist es für den Stadtverkehr am vorteilhaftesten, wenn die Geschwindigkeitssteuervorrichtung die Geschwindigkeit des Fahrzeugs so reguliert, dass das Fahrzeug entweder einen vorgebbaren Abstand zu einem vorherfahrenden Fahrzeug einhält, oder die Geschwindigkeit des vorherfahrenden Fahrzeugs übernimmt. Zur Erfassung der Geschwindigkeit eines vorherfahrenden Fahrzeugs oder des Abstands zu einem vorherfahrenden Fahrzeug ist die Geschwindigkeitssteuervorrichtung mit einer Sensoreinrichtung ausgestattet. Diese kann von der Geschwindigkeitssteuervorrichtung entweder automatisch mit dem Starten des Fahrzeugs aktiviert werden, oder auf Wunsch durch den Fahrer über ein dazugehöriges, in Figur 1 nicht eingezeichnetes Eingabeelement.

Um die Geschwindigkeitssteuervorrichtung auf die Einhaltung eines Abstandes zum vorherfahrenden Fahrzeug, bzw. zum Angleichen der Fahrzeuggeschwindigkeit an die des vorherfahrenden Fahrzeugs zu aktivieren, drückt der Fahrer auf eine Taste 10. Solange die Taste 10 gedrückt wird, steuert die Geschwindigkeitssteuervorrichtung bei Erfassung eines vorherfahrenden Fahrzeugs die Geschwindigkeit des Fahrzeugs in dem Beispiel aus Figur 1 derart, dass die Geschwindigkeit des vorherfahrenden Fahrzeugs übernommen wird.

Dabei sind mehrere Möglichkeiten bezüglich einer Einstellung der Größe des Abstands zwischen dem Fahrzeug mit der Geschwindigkeitssteuervorrichtung und dem vorherfahrenden Fahrzeug denkbar. Beispielsweise kann die Geschwindigkeitssteuervorrichtung genau den Abstand übernehmen und konstant einhalten, der zwischen dem Fahrzeug und dem vorherfahrenden während der Aktivierung der Geschwindigkeitssteuervorrichtung durch Drücken der Taste 10 vorherrschte. Eine andere Möglichkeit sieht vor, dass in Abhängigkeit eines Geschwindigkeitswertes, der von dem Fahrzeug gefahren wird, ein bestimmter, sinnvoller Abstandswert vorgegeben ist.

Dabei ist in diesem Beispiel die Geschwindigkeitssteuervorrichtung zur Übernahme der Geschwindigkeit des vorherfahrenden Fahrzeugs aktiviert, solange der Fahrer weiterhin die Taste 10 gedrückt hält, und solange das vorherfahrende Fahrzeug von der Sensoreinrichtung erfasst wird. Möglich wäre es auch, dass der Fahrer die Taste 10 in regelmäßigen Abständen immer wieder drücken muss, um die Geschwindigkeitssteuervorrichtung derart zu steuern, dass der vorgegebene Abstand zwischen seinem und dem vorherfahrenden Fahrzeug konstant eingehalten, oder die Geschwindigkeit des vorherfahrenden Fahrzeugs vom eigenen Fahrzeug übernommen wird. Denkbar ist dabei auch die Verwendung eines Blinksignals, welches den Fahrer immer wieder zum Drücken der Taste 10 auffordert.

Beim Loslassen oder Nichtwiederbetätigen der Taste 10, oder sobald über eine Sensoreinrichtung kein vorherfahrendes Auto erfasst wird, verzögert das Fahrzeug. Der Fahrer muss nun wieder selbst beschleunigen und bremsen. Denkbar ist es auch, dass beim Loslassen oder Nichtwiederbetätigen der Taste 10 die Geschwindigkeitssteuervorrichtung das Fahrzeug auf eine, in Bezug auf die vorher gefahrene Geschwindigkeit sinnvolle Geschwindigkeitsstufe abbremst und, sofern der Fahrer nicht innerhalb einer vorgegebenen Zeit reagiert, das Fahrzeug ganz zum Halten bringt.

Es bietet sich an, die Taste 10 so anzubringen, dass sie für den Fahrer bequem zu erreichen ist. Dabei ist zu beachten, dass auch während einer Betätigung der Taste 10 der Fahrer noch eine Hand frei haben soll. Es ist deshalb sinnvoll, die Taste 10 so anzubringen, dass der Fahrer sie mit dem Daumen der linken Hand drücken kann, während er mit der gleichen Hand das Lenkrad hält. Die rechte Hand bleibt dabei für andere Handgriffe im Auto frei. An dem Lenkrad in Figur 1 ist eine Mulde 16 zu erkennen, welche der linken Hand des Fahrers bequem Halt bietet. Die Mulde 16 ist im Übergang zur Speiche 18 abgeflacht. Diese Abflachung bietet eine optimale Position für die Taste 10. Der Fahrer erreicht die Taste 10 dort nicht aus Versehen während des Haltens des Lenkrads, muss aber zum Betätigen dieser Taste 10 nicht weit umher greifen. Er kann sie bequem mit dem Daumen der linken Hand drücken, während er gleichzeitig das Lenkrad festhält. In dem Beispiel aus Figur 1 ist die Taste 10 der Wölbung der Mulde angepasst, um dem Daumen beim Gedrückthalten einen besseren Halt zu verschaffen.

Für die Fahrt im Stadtverkehr bietet es sich an, dass der Fahrer die Geschwindigkeitssteuervorrichtung nur aktivieren kann, indem er die Taste 10 fortwährend drückt. Anders verhält es sich bei einer Fahrt auf einer Autobahn oder auf einer Landstraße. Hier bewährt sich eine Steuerung der Geschwindigkeit des Fahrzeugs über eine Geschwindigkeitssteuervorrichtung auch, ohne dass der Fahrer über eine Eingabebetätigung an die Geschwindigkeitssteuervorrichtung fortlaufend erinnert werden muss. Eine Aktivierung der Geschwindigkeitssteuervorrichtung für den Autobahnverkehr sollte für den Fahrer deshalb mit weniger an persönlichen Arbeitsaufwand verbunden sein.

Aus diesem Grund ist die Eingabeeinrichtung aus Figur 1 so ausgelegt, dass die Funktion der Taste 10 ab einem bestimmten Geschwindigkeitsgrenzwert wechselt. Über das Betätigen der Taste 10 bei einer Geschwindigkeit über dem Geschwindigkeitsgrenzwert wird nun eine Geschwindigkeitssteuervorrichtung aktiviert, welche eine bestimmte Höchstgeschwindigkeit einzuhalten versucht, solange kein vorherfahrendes Fahrzeug von der Sensoreinrichtung erfasst wird. Dabei ist es möglich, dass die Höchstgeschwindigkeit von dem Fahrer an die Geschwindigkeitssteuervorrichtung eingegeben wird, indem er die Taste 10 drückt. Die Geschwindigkeitssteuervorrichtung übernimmt den Geschwindigkeitswert als Höchstgeschwindigkeit, der zum Zeitpunkt der Betätigung der Taste 10 gefahren wurde. Erst wenn die Sensoreinrichtung am Fahrzeug ein vorherfahrendes Fahrzeug innerhalb eines bestimmten Sicherheitsabstands erfasst, wird die Geschwindigkeit des Fahrzeugs von der Geschwindigkeitssteuervorrichtung erneut so reguliert, dass ein vorgebbarer Abstand zum vorherfahrenden Fahrzeug eingehalten wird. Dabei kann der Fahrer den Abstand vergrößern oder verkleinern, indem er auf die Rolle 14 drückt und dann herauf- oder herunter dreht. Ist das vorherfahrende Fahrzeug nicht mehr innerhalb eines bestimmten Abstandes von der Sensoreinrichtung erfassbar, so beschleunigt die Geschwindigkeitssteuervorrichtung wieder auf die vorgegebene Höchstgeschwindigkeit.

Da die Geschwindigkeitssteuervorrichtung bei einer höheren Geschwindigkeit nicht durch permanentes Drücken der Taste 10 vom Fahrer aktiviert werden muss, kann sie durch ein Loslassen der Taste 10 auch nicht mehr deaktiviert werden. Zu diesem Zweck ist es vorteilhaft, ein weiteres Betätigungselement an der Eingabeeinrichtung anzuordnen, damit dem Fahrer neben Gaspedal und Bremse noch weitere Möglichkeiten zur Deaktivierung der Geschwindigkeitssteuervorrichtung zur Verfügung stehen. In Figur 1 befindet sich neben der Taste 10 die Taste 12. Über die Taste 12 kann der Fahrer einerseits die Geschwindigkeitssteuervorrichtung deaktivieren, oder, bei einer vorhergegangenen Deaktivierung der Geschwindigkeitssteuervorrichtung, diese erneut aktivieren. In diesem Fall übernimmt die Geschwindigkeitssteuervorrichtung den Geschwindigkeitswert erneut als Höchstgeschwindigkeit, auf welchen das Fahrzeug vor der Deaktivierung der Geschwindigkeitssteuervorrichtung eingestellt war.

Ist der Fahrer mit der gesetzten Höchstgeschwindigkeit nicht zufrieden, so kann er diese über die Rolle 14, welche in Figur 1 ebenfalls zu erkennen ist, herauf oder herunter korrigieren.

Damit der Fahrer seine manuellen Eingaben für die Geschwindigkeitssteuervorrichtung richtig tätigen kann, muss er wissen, auf welchen Modus diese gerade eingestellt ist. Zusätzlich kann es von großem Vorteil sein, wenn der Fahrer erfährt, ob von der Sensoreinrichtung gerade ein vorherfahrendes Fahrzeug erfasst wird oder nicht. Zu diesem Zweck sollte die Geschwindigkeitssteuervorrichtung auch mindestens ein Anzeigeelement umfassen, über welches dem Fahrer diese Informationen schnell mitgeteilt werden können.

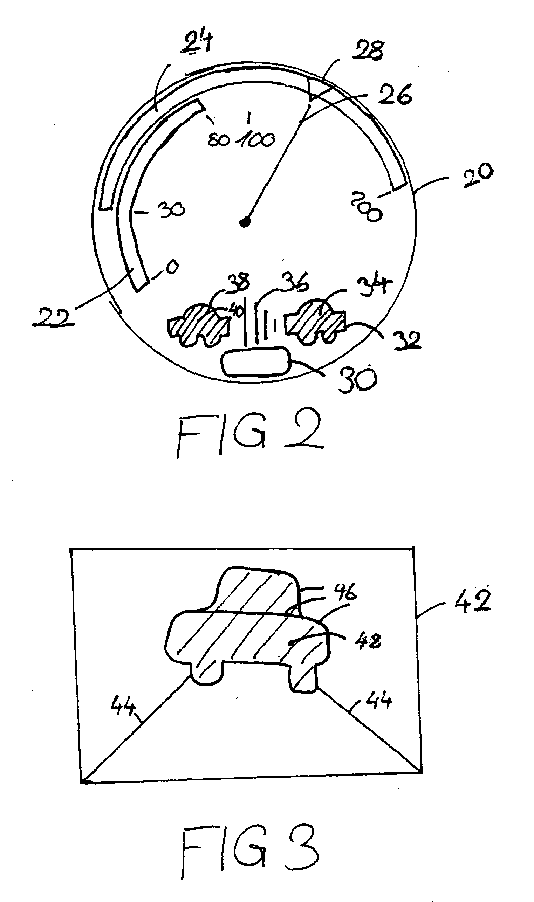

In Figur 2 und 3 sind ein Tachometer 20 und eine Anzeigefläche 42 eines Fahrerinformationssystems mit geeigneten Anzeigeelementen für die Geschwindigkeitssteuervorrichtung zu erkennen. Da der Fahrer daran gewöhnt ist, während der Fahrt immer wieder auf den Tachometer 20 oder auf die Anzeigefläche 42 des Fahrerinformationssystems zu blicken, ist das Beachten der Anzeigeelemente seiner Geschwindigkeitssteuervorrichtung für ihn damit nicht mit einer Umstellung verbunden.

Um den Fahrer während der Fahrt an die Möglichkeit einer Verwendung der Geschwindigkeitssteuervorrichtung für den Stadtverkehr und für den Autobahnverkehr zu erinnern, sind am Rand des Tachometers 20 nahe an bestimmten Geschwindigkeitswerten der Tachometerskala zwei Leuchtstreifen 22 und 24 angebracht. Vorzugsweise sind diese so ausgerichtet, dass sie in unterschiedlichen Farben leuchten können. Eine Möglichkeit wäre dabei die Verwendung von der Farbe Grün für den Leuchtstreifen 22 und der Farbe Orange für den Leuchtstreifen 24. Der Leuchtstreifen 22, der sich über die niedrigeren Geschwindigkeitswerte erstreckt, zeigt an, dass bei diesen Geschwindigkeitswerten die Geschwindigkeitssteuervorrichtung in einem Modus für den Stadtverkehr aktiviert werden kann. Der Leuchtstreifen 24, der sich über die höheren Geschwindigkeitswerte erstreckt, gibt den Möglichkeitsbereich für die Geschwindigkeitssteuervorrichtung in einem Modus für das schnelle Fahren, beispielsweise auf einer Autobahn oder einer Landstraße an. Über den Zeiger 26 erfährt der Fahrer damit nicht nur, welche Geschwindigkeit von Fahrzeug gerade gefahren wird, sondern auch, welche Möglichkeiten einer automatischen Steuerung der Fahrzeuggeschwindigkeit durch die Geschwindigkeitssteuervorrichtung sich ihm gerade bieten.

Fährt das Fahrzeug in einem der beiden Geschwindigkeitsbereiche, so kann der zugehörige Leuchtstreifen sichtbar werden, in bestimmten Ausführungen auch hell aufleuchten, während der andere dunkel bleibt. Fährt das Fahrzeug eine Geschwindigkeit aus dem Bereich, in dem sich die Geschwindigkeitssteuervorrichtung sowohl für einen konstanten Abstand zum vorherfahrenden Fahrzeug, als auch für eine konstante Höchstgeschwindigkeit aktivieren lässt, so können beide Leuchtstreifen 22 und 24 hell aufleuchten. Der Fahrer kann sich dann entscheiden, welche Geschwindigkeitssteuervorrichtung er aktivieren möchte. Drückt er die Taste 10 bei Erfassung eines vorherfahrenden Fahrzeugs innerhalb eines bestimmten Abstands zu seinem eigenen Fahrzeug durch die Sensoreinrichtung für ein längeres Zeitintervall, so wird die Geschwindigkeitssteuervorrichtung für eine Übernahme der Geschwindigkeit des vorherfahrenden Fahrzeugs aktiviert. Drückt der Fahrer die Taste 10 hingegen nur kurz, so fährt das Fahrzeug mit der vorgegebenen Höchstgeschwindigkeit so lange, bis die Sensoreinrichtung ein vorherfahrendes Fahrzeug erfasst.

Verlässt das Fahrzeug den Geschwindigkeitsbereich von einem Leuchtstreifen 22 oder 24, so kann der jeweilige Leuchtstreifen 22 oder 24 zuvor noch ein besonderes Blicksignal aussenden, um den Fahrer an die Umstellung bei der Betätigung der Taste 10 zu erinnern.

Hat der Fahrer die Geschwindigkeitssteuervorrichtung so aktiviert, dass das Fahrzeug eine konstante Höchstgeschwindigkeit einhalten soll, so sollte er an den gesetzten Wert für die Höchstgeschwindigkeit auch während der Weiterfahrt erinnert werden. Zu diesem Zweck ist im Tachometer 20 das Leuchtsymbol 28 angebracht, welches genau über dem Geschwindigkeitswert der Tachometerskala steht, welchen der Fahrer als gewünschte Höchstgeschwindigkeit gewählt hat.

Um dem Fahrer mitzuteilen, dass die Sensoreinrichtung zur Erfassung eines vorherfahrenden Fahrzeugs aktiviert ist, dass diese eventuell ein Fahrzeug erfasst hat, und wenn ja, in welchem Abstand, dazu sind über dem Kilometerzähler 30 die Leuchtsymbole 32 bis 40 angebracht. Dabei stehen die Leuchtumrandung 32 und die Leuchtfläche 34 für das Fahrzeug mit der Geschwindigkeitssteuervorrichtung, das Leuchtsymbol 36 soll die Aktivierung der Sensoreinrichtung dem Fahrer anzeigen und die Leuchtumrandung 38 und die Leuchtfläche 40 stellen einzeln oder zusammen ein von der Sensoreinrichtung erfasstes, vorherfahrendes Fahrzeug dar. Die Leuchtumrandungen 32 und 38 ähneln dabei den Umrandungen von je einem seitlich gesehenen Fahrzeug, die Leuchtflächen 34 und 40 stellen je eine Fläche eines seitlich gesehenen Fahrzeugs dar. Das Leuchtsymbol 36, welches zwischen den Leuchtsymbolen 32 und 34 auf der rechten, und 38 und 40 auf der linken Seite angeordnet ist, besteht aus mehreren senkrechten Strichen, welche in ihrer Länge von rechts nach links zunehmen. Das Leuchtsymbol 36 soll in seinem Aussehen den Fahrer an ein ausgesendetes Funksignal erinnern. Alle Leuchtsymbole 32 bis 40 können dabei so gestaltet werden, dass sie je nach Situation in verschiedenen Farben und unterschiedlichen Leuchtstärken aufleuchten können.

Da der Fahrer eines Fahrzeugs daran gewöhnt ist, ein vorherfahrendes Fahrzeug auch wirklich vor sich zu sehen, kann, wie schon erwähnt, für die Geschwindigkeitssteuervorrichtung noch eine Anzeigefläche 42 des FahrerInformationssystem genutzt werden. Diese Anzeigefläche 42 kann über eine Eingabeeinrichtung für unterschiedliche Anzeigen aktivierbar sein, beispielsweise kann sie auf Wunsch des Fahrers auch Informationen bezüglich des Autoradios anzeigen.

Wurde die Anzeigefläche 42 über eine daran angebrachte, in Figur 3 nicht eingezeichnete Eingabeeinrichtung für eine Anzeige der Geschwindigkeitssteuervorrichtung aktiviert, wie dies in Figur 3 gezeigt ist, so können über die Leuchtsymbole 44 bis 48 in unterschiedlichen Farben und Leuchtstufen, im Zusammenwirken mit den Leuchtsymbolen 32 bis 40, dem Fahrer unterschiedliche Sachverhalte erklärt werden. Dabei ähnelt das Leuchtsymbol 44 einer Straße, wie sie von einem sie befahrenden Betrachter wahrgenommen wird. Das Leuchtsymbol 46 stellt die Umrandung eines aus einer bestimmten Distanz von hinten gesehenen Fahrzeugs dar und das Leuchtsymbol 48 gibt die Fläche dieses Fahrzeugs wieder.

Wurde die Sensoreinrichtung des Fahrzeugs nicht aktiviert, so leuchtet keines der Leuchtsymbole 32 bis 40 oder 44 bis 48 auf. Möglich wäre allerdings das Anbringen eines zusätzlichen Leuchtsymbols, beispielsweise eines Fragezeichens, welches den Fahrer an die Aktivierung der Geschwindigkeitssteuervorrichtung erinnert.

Bei einer Aktivierung der Sensoreinrichtung ohne Erfassung eines vorherfahrenden Fahrzeugs und ohne Aktivierung der Geschwindigkeitssteuervorrichtung, kann dies dem Fahrer durch ein grünes Leuchten der Leuchtsymbole 32 und 36 im Tachometer 20 angezeigt werden. In der Anzeigefläche 42 können die Leuchtsymbole 44 und 46 nur ganz schwach in weißer Farbe leuchten, um den Fahrer zu verdeutlichen, dass ein vorherfahrendes Fahrzeug von der Sensoreinrichtung nicht "gesehen" wird.

Wenn hingegen ein Fahrzeug in nicht zu nahem Abstand erfasst, die Geschwindigkeitssteuervorrichtung aber noch nicht aktiviert wurde, so leuchtet im Tachometer 20 zusätzliche zu den Leuchtsymbolen 32 und 36 noch das Leuchtsymbol 38 in Grün. In der Anzeigefläche 42 leuchten die Leuchtsymbole 44 und 46 nun ebenfalls in Grün.

Mit der Aktivierung der Geschwindigkeitssteuervorrichtung für eine Übernahme der Geschwindigkeit des vorherfahrenden Fahrzeugs beginnen auch die Leuchtflächen 34, 40 und 48 in Grün zu leuchten, um zu symbolisieren, dass sich das Fahrzeug über die Geschwindigkeitssteuervorrichtung quasi am vorherfahrenden Fahrzeug "festhält". Diese zusätzlichen Leuchtsignale sollen dazu führen, dass der Fahrer sich dieses Sachverhalts während des Vorgangs bewusst bleibt.

Verlässt das Fahrzeug bei aktivierter Geschwindigkeitssteuervorrichtung für eine Übernahme der Geschwindigkeit des vorherfahrenden Fahrzeugs den zugehörigen Geschwindigkeitsbereich und steht ein Umschalten im Modus der Geschwindigkeitssteuervorrichtung bevor, so wird dies dem Fahrer durch ein schwächer werdendes Leuchten der Leuchtsymbole 32 bis 38 und 44 bis 48 mitgeteilt. Zusätzlich erscheint ein Blinksignal im Farbstreifen 22. Der Fahrer kann sich damit auf einen neuen Modus der Geschwindigkeitssteuervorrichtung vorbereiten.

Es kann aber auch vorkommen, dass der Fahrer die Geschwindigkeitssteuervorrichtung für eine Übernahme der Geschwindigkeit des vorherfahrenden Fahrzeugs bei einem zu geringen Abstand zum vorherfahrenden Fahrzeug aktiviert. In einer derartigen Situation sollte der Fahrer unbedingt auf den zu geringen Abstand zwischen dem seinen und dem vorherfahrenden Fahrzeug hingewiesen werden. Dazu leuchten die Leuchtsymbole 32, 36, 38, 44 und 46 in roter Farbe, da der Fahrer daran gewohnt ist, die Farbe Rot mit einem Anhalten oder mit einer Verringerung der Geschwindigkeit seines Fahrzeugs in Verbindung zu bringen.

Wichtig ist es auch, nach einer Aktivierung der Geschwindigkeitssteuervorrichtung für eine konstantgehaltene Höchstgeschwindigkeit, bei Nichterfassung eines vorherfahrenden Fahrzeugs innerhalb eines bestimmten Abstandes, den Fahrer fortlaufend an die Aktivierung der Geschwindigkeitssteuervorrichtung zu erinnern. Zu diesem Zweck können die Leuchtsymbole 32 bis 36 bei Nichterfassung eines vorherfahrenden Fahrzeugs grün leuchten. Die Leuchtsymbole 44 und 46 leuchten wiederum nur ganz schwach in weißer Farbe, um den Fahrer zu verdeutlichen, dass ein vorherfahrendes Fahrzeug von der Sensoreinrichtung noch nicht erfasst wurde.

Wird hingegen ein vorherfahrendes Fahrzeug von der Sensoreinrichtung erfasst, so sollte mindestens ein Anzeigeelement dem Fahrer dies mitteilen. Dies kann geschehen, indem nun auch die Leuchtsymbole 38, 44 und 46 grün leuchten, solange das vorherfahrende Fahrzeug von der Sensoreinrichtung erfasst wird.

Zusätzlich können in der Anzeigefläche 42 des Fahrerinformationssystems noch Wörter erscheinen, welche dem Fahrer erklären, in welchem Modus die Geschwindigkeitssteuervorrichtung aktiviert wurde, und/oder in welchem Abstand ein vorherfahrendes Fahrzeug von der Sensoreinrichtung erfasst wurde.

## Patentansprüche

1. Geschwindigkeitssteuervorrichtung für ein Fahrzeug umfassend:
- eine Sensoreinrichtung zur Erfassung mindestens eines Parameters eines sich bewegenden Zielobjekts außerhalb des Fahrzeugs, die ausgelegt ist, an ihrem Ausgang ein Sensorsignal in Abhängigkeit des mindestens eines erfassten Parameters des Zielobjekts bereitzustellen;
- eine Eingabeeinrichtung (10,12,14) mit mindestens einer Betätigungskomponente (10) zur Betätigung durch einen Fahrer, die ausgelegt ist, an ihrem Ausgang ein Betätigungssignal in Abhängigkeit der Betätigung der Betätigungskomponente (10) durch den Fahrer bereitzustellen;
- eine Steuereinrichtung, die eingangsseitig gekoppelt ist erstens an den Ausgang der Sensoreinrichtung zur Zuführung des Sensorsignals von der Sensoreinrichtung, und zweitens an den Ausgang der Eingabeeinrichtung (10,12,14) zur Zuführung des Betätigungssignals der Eingabeeinrichtung (10,12,14),
wobei die Steuereinrichtung ausgelegt ist, die Einstellung der Geschwindigkeit des Fahrzeugs gemäß mindestens einem ersten oder einem zweiten Modus zu bewirken;
wobei die Steuervorrichtung ausgelegt ist die Geschwindigkeit des Fahrzeugs bei Erfassung eines Zielobjekts durch die Sensoreinrichtung so zu steuern, dass während des ersten Modus die Geschwindigkeit des Fahrzeugs abhängig von dem Sensorsignal ist und während des zweiten Modus die Geschwindigkeit des Fahrzeugs unabhängig von dem Sensorsignal ist, und
wobei die Steuereinrichtung über eine Betätigung der Betätigungskomponente (10) durch den Fahrer von dem zweiten in den ersten Modus schaltbar ist,
**dadurch gekennzeichnet, dass**
die Steuereinrichtung ausgelegt ist, bei Ausbleiben der Betätigung der Betätigungskomponente (10) durch den Fahrer für einen vorgebbaren Zeitraum von dem ersten in den zweiten Modus zu schalten, und
bei einer einmaligen Betätigung der Betätigungskomponente (10) bei einer Geschwindigkeit des Fahrzeugs über einer Grenzwertgeschwindigkeit das Fahrzeug in einem dritten Modus steuerbar ist, wobei die Steuervorrichtung ausgelegt ist im dritten Modus die Geschwindigkeit des Fahrzeugs so zu steuern, dass bei Nichterfassung eines Zielobjekts durch die Sensoreinrichtung eine vorgebbare Höchstgeschwindigkeit eingehalten wird und bei Erfassung eines Zielobjekts durch die Sensoreinrichtung ein vorgebbarer Abstand zu diesem eingehalten wird.

2. Geschwindigkeitssteuervorrichtung nach Anspruch 1, wobei die Steuervorrichtung ausgelegt ist, bei einem Übergang vom ersten in den zweiten Modus die Geschwindigkeit des Fahrzeugs zu verringern und/oder das Fahrzeug anzuhalten.

3. Geschwindigkeitssteuervorrichtung nach Anspruch 1 oder 2, wobei die Betätigungskomponente (10) als Druckknopf (10) an einem Lenkrad des Fahrzeugs ausgebildet ist und so angebracht ist, dass der Druckknopf (10) sich mit dem Daumen der linken Hand des Fahrers bei gleichzeitigem Halten des Lenkrads mit der gleichen Hand drücken lässt.

4. Geschwindigkeitssteuervorrichtung nach einem der vorhergehenden Ansprüche, wobei die Geschwindigkeitssteuervorrichtung mindestens ein Anzeigeelement (22-28,32-40,44-48) umfasst, zur Anzeige der Steuerung der Fahrzeuggeschwindigkeit in dem ersten Modus oder in dem zweiten Modus mit oder ohne die Erfassung eines Zielobjekts durch die Sensoreinrichtung an den Fahrer.

5. Geschwindigkeitssteuervorrichtung nach Anspruch 4, wobei mindestens ein Anzeigeelement (22-28,32-40,44-48) in einen Tachometer (20) oder in ein Fahrerinformationssystem (42) des Fahrzeugs integriert ist.

6. Verfahren zum Steuern der Geschwindigkeit eines Fahrzeugs durch
- Erfassen mindestens eines Parameters eines sich bewegenden Zielobjekts außerhalb des Fahrzeugs;
- Bereitstellen eines Sensorsignals in Abhängigkeit des mindestens eines erfassten Parameters des Zielobjekts;
- Betätigen einer Betätigungskomponente (10) durch den Fahrer;
- Bereitstellen eines Betätigungssignals in Abhängigkeit des Betätigens der Betätigungskomponente (10);
- Einstellen einer Fahrzeuggeschwindigkeit in mindestens einem ersten oder einem zweiten Modus,
wobei bei Erfassung eines Zielobjekts die Geschwindigkeit des Fahrzeugs so gesteuert wird, dass während des ersten Modus die Geschwindigkeit des Fahrzeugs abhängig von dem Sensorsignal gesteuert wird und während des zweiten Modus die Geschwindigkeit des Fahrzeugs unabhängig von dem Sensorsignal gesteuert wird, und
wobei über eine Betätigung der Betätigungskomponente (10) von dem zweiten in den ersten Modus geschaltet wird;
**dadurch gekennzeichnet, dass**
bei Ausbleiben der Betätigung der Betätigungskomponente (19) für einen vorgebbaren Zeitraum von dem ersten in den zweiten Modus geschaltet wird und
bei einer Geschwindigkeit des Fahrzeugs über einer Grenzwertgeschwindigkeit das Fahrzeug nach einem einmaligen Betätigen der Betätigungskomponente (10) der Eingabeeinrichtung (10,12,14) in einem dritten Modus gesteuert wird, in dem das Fahrzeug bei Nichterfassen eines Zielobjekts auf eine eingebbare Höchstgeschwindigkeit beschleunigt wird und bei Erfassen eines Zielobjekts ein vorgebbarer Abstand zwischen diesem und dem Fahrzeug gehalten wird.

## Claims

1. A device for controlling the speed of a vehicle, comprising:
- a sensor arrangement for detecting at least one parameter of a moving target object outside of the vehicle, said sensor arrangement being designed to provide a sensor signal at its output as a function of the at least one detected parameter of the target object;
- input means (10, 12, 14) comprising at least one operating component (10) for operation by a driver, which is designed to provide an operating signal at its output as a function of the operation of the operating component (10) by the driver;
- a control, which is coupled on the input side firstly to the output of the sensor arrangement for the supply of the sensor signal by the sensor arrangement, and secondly to the output of the input means (10, 12, 14) for the supply of the operating signal of the input means (10, 12, 14),
the control being designed to bring about an adjustment of the speed of the vehicle according to at least a first or a second mode;
the control device being designed, on detection of a target object by the sensor arrangement, to control the speed of the vehicle in such a way that in the first mode the speed of the vehicle is dependent on the sensor signal and in the second mode the speed of the vehicle is independent of the sensor signal, and
the control being switchable by the driver from the second into the first mode by operation of the operating component (10),
**characterized in that**,
when the driver fails to operate the operating component (10) for a preset period of time, the control is designed to switch from the first into the second mode, and
with a single operation of the operating component (10) at a speed of the vehicle above a threshold speed, the vehicle can be controlled in a third mode, the control device being designed in the third mode to control the speed of the vehicle in such a way that, when a target object is not detected by the sensor arrangement, a preset maximum speed is maintained, and when a target object is detected by the sensor arrangement, a preset distance from said target object is maintained.

2. A speed control device according to Claim 1, the control device being designed, upon a change from the first into the second mode, to reduce the speed of the vehicle and/or stop the vehicle.

3. A speed control device according to Claim 1 or 2, the operating component (10) taking the form of a push-button (10) located on a steering wheel of the vehicle and mounted so that the push-button (10) can be pressed with the thumb of the driver's left hand whilst he simultaneously holds the steering wheel with the same hand.

4. A speed control device according to one of the preceding claims, the speed control device comprising at least one display element (22-28, 32-40, 44-48) for indicating to the driver the control of the vehicle speed in the first mode or in the second mode with or without the detection of a target object by the sensor arrangement.

5. A speed control device according to Claim 4, at least one display element (22-28, 32-40, 44-48) being integrated into a speedometer (20) or driver information system (42) of the vehicle.

6. A method of controlling the speed of a vehicle by
- detection of at least one parameter of a moving target object outside of the vehicle;
- provision of a sensor signal as a function of the at least one detected parameter of the target object;
- operation of an operating component (10) by the driver;
- provision of an operating signal as a function of the operation of the operating component (10);
- adjustment of a vehicle speed in at least a first or a second mode,
the speed of the vehicle being controlled, when a target object is detected, in such a way that, in the first mode, the speed of the vehicle is controlled dependent on the sensor signal and, in the second mode, the speed of the vehicle is controlled independently of the sensor signal, and
switching from the second into the first mode being effected by operation of the operating component (10);
**characterized in that**
when the operating component (19) is not operated for a preset period of time, control is switched from the first into the second mode and
at a speed of the vehicle above a threshold speed, following a single operation of the operating component (10) of the input means (10, 12, 14), the vehicle is controlled in a third mode, in which when a target object is not detected the vehicle is accelerated to an input maximum speed and when a target object is detected a preset distance is maintained between said target object and the vehicle.

## Revendications

1. Dispositif de commande de vitesse pour un véhicule comportant :
- un système de capteur destiné à détecter au moins un paramètre d'un objet cible mobile à l'extérieur du véhicule, qui est étudié pour mettre à disposition à sa sortie un signal de capteur en fonction du au moins un paramètre détecté de l'objet cible ;
- un système d'entrée (10, 12, 14) comprenant au moins une composante d'actionnement (10) destinée à être actionnée par un conducteur, qui est étudié pour mettre à disposition à sa sortie un signal d'actionnement en fonction de l'actionnement de la composante d'actionnement (10) par le conducteur ;
- un système de commande qui est couplé côté entrée premièrement à la sortie du système de capteur pour amener le signal de capteur provenant du système de capteur, et secondement à la sortie du système d'entrée (10, 12, 14) pour amener le signal d'actionnement au système d'introduction (10, 12, 14),
le système de commande étant étudié pour effectuer le réglage de la vitesse du véhicule selon au moins un premier ou un deuxième mode ;
le dispositif de commande étant étudié pour commander la vitesse du véhicule lorsqu'un objet cible est détecté par le système de capteur de sorte que, pendant le premier mode, la vitesse du véhicule dépend du signal de capteur et, pendant le deuxième mode, la vitesse du véhicule ne dépend pas du signal de capteur, et
le système de commande pouvant passer du deuxième au premier mode lorsque le conducteur actionne la composante d'actionnement (10),
**caractérisé en ce que**
le système de commande est étudié pour passer du premier au deuxième mode en l'absence d'actionnement de la composante d'actionnement (10) par le conducteur pour un laps de temps pouvant être prédéfini, et
lorsque la composante d'actionnement (10) est actionnée une seule fois, lorsqu'une vitesse du véhicule est supérieure à une vitesse limite, le véhicule peut être commandé dans un troisième mode, le dispositif de commande étant étudié pour commander dans le troisième mode, la vitesse du véhicule de sorte que, lorsqu'un objet cible n'est pas détecté par le système de capteur, une vitesse maximale pouvant être prédéfinie est conservée et lorsqu'un objet cible est détecté par le système de capteur, une distance pouvant être prédéfinie par rapport à celui-ci est maintenue.

2. Dispositif de commande de vitesse selon la revendication 1, dans lequel le dispositif de commande est étudié pour réduire la vitesse du véhicule et/ou arrêter le véhicule lors d'un passage du premier au deuxième mode.

3. Dispositif de commande de vitesse selon la revendication 1 ou 2, dans lequel la composante d'actionnement (10) est conçue comme un bouton-pression (10) sur un volant du véhicule et est aménagée de sorte que le bouton-pression (10) peut être pressé par le doigt de la main gauche du conducteur tout en tenant simultanément le volant de la même main.

4. Dispositif de commande de vitesse selon l'une quelconque des revendications précédentes, dans lequel le dispositif de commande de vitesse comporte au moins un élément indicateur (22-28, 32-40, 44-48), destiné à indiquer au conducteur la commande de la vitesse du véhicule dans le premier mode ou dans le deuxième mode, avec ou sans détection d'un objet cible par le système de capteur.

5. Dispositif de commande de vitesse selon la revendication 4, dans lequel au moins un élément indicateur (22-28, 32-40, 44-48) est intégré dans un tachymètre (20) ou dans un système d'information du conducteur (42) du véhicule.

6. Procédé de commande de la vitesse d'un véhicule par
- détection d'au moins un paramètre d'un objet cible mobile à l'extérieur du véhicule ;
- mise à disposition d'un signal de capteur en fonction du au moins un paramètre détecté de l'objet cible ;
- actionnement d'une composante d'actionnement (10) par le conducteur ;
- mise à disposition d'un signal d'actionnement en fonction de l'actionnement de la composante d'actionnement (10) ;
- réglage d'une vitesse du véhicule dans au moins un premier ou un deuxième mode,
sachant que, lors de la détection d'un objet cible, la vitesse du véhicule est commandée de sorte que, pendant le premier mode, la vitesse du véhicule est commandée en fonction du signal de capteur et, pendant le deuxième mode, la vitesse du véhicule est commandée indépendamment du signal de capteur, et
sachant qu'en actionnant la composante d'actionnement (10), on passe du deuxième au premier mode ;
**caractérisé en ce que**
en l'absence d'actionnement de la composante d'actionnement (19) pour un laps de temps pouvant être prédéfini, on passe du premier au deuxième mode et
lorsqu'une vitesse du véhicule est supérieure à une vitesse limite, le véhicule, après avoir actionné une seule fois la composante d'actionnement (10) du système d'entrée (10, 12, 14), est commandé dans un troisième mode, dans lequel le véhicule, lorsqu'un objet cible n'est pas détecté, est accéléré jusqu'à une vitesse maximale pouvant être introduite et, lorsqu'un objet cible est détecté, une distance pouvant être prédéfinie entre celui-ci et le véhicule est maintenue.
